Europäisches Patentamt

European Patent Office

Office européen des brevets

(11) Veröffentlichungsnummer: **0 471 273 A1**

(12) **EUROPÄISCHE PATENTANMELDUNG**

(21) Anmeldenummer: **91113196.9**

(22) Anmeldetag: **06.08.91**

(51) Int. Cl.5: **G05B 19/403**

(30) Priorität: **09.08.90 DE 4025263**

(43) Veröffentlichungstag der Anmeldung:
**19.02.92 Patentblatt 92/08**

(84) Benannte Vertragsstaaten:
**DE FR GB IT**

(71) Anmelder: **LASCHET MASCHINENBAU GMBH
& CO. KG
Hachestrasse 68
W-4300 Essen 1(DE)**

(72) Erfinder: **Segger, Rolf
Richratherstrasse 150
W-4010 Hilden(DE)**

(74) Vertreter: **Sturies, Herbert et al
Patentanwälte Dr. Ing. Dipl. Phys. Herbert
Sturies Dipl. Ing. Peter Eichler
Brahmsstrasse 29, Postfach 20 12 42
W-5600 Wuppertal 2(DE)**

(54) Verfahren zur Steuerung von Elektromotoren für Werkzeug- und Handhabungsmaschinen.

(57) Das Verfahren betrifft die Steuerung eines Elektromotors (10) für Werkzeugmaschinen. Der Motorstrom (T) des Elektromotors (10) wird mit einem digitalen Regelungsteil (11) berechnet, wozu er Istwerte und von einem digitalen Steuerungsteil (12) und Sollwerte erhält, die im Regelungsteil (11) erfolgenden Soll-Istwert-Vergleichen zugrundegelegt werden, und bei dem Positions-Istwerte des Motors (10) berücksichtigt werden.

Um zu erreichen, daß die Steuerungseinrichtung baulich einfach ausgebildet sein kann und funktionsmäßig sehr flexibel ist, wird das Verfahren so durchgeführt, daß der digitale Regelungsteil (11) und der digitale Steuerungteil (12) für die Ist- und Sollwertübermittlung betreffende Datentransfers softwaremäßig verknüpft werden, daß der digitale Regelungsteil (11) vom digitalen Steuerungteil (12) frei vorbestimmbare Korrekturfaktoren (z.B.$k_v$,$k_s$) übermittelt erhält, und daß der digitale Regelungsteil (11) diese Korrekturfaktoren ($k_v$,$k_s$) mit von Soll-Istwert-Differenzen abhängigen Größen (z.B.$S(y)$) multipliziert und mit mindestens einem Produkt dieser Multiplikationen den Motorstrom (T) beeinflußt.

Die Erfindung bezieht sich auf ein Verfahren zur Steuerung von Elektromotoren für Werkzeug- und Handhabungsmaschinen, insbesondere für spanende Werkzeugmaschinen, bei dem der Motorstrom mindestens eines Elektromotors mit einem digitalen Regelungsteil berechnet wird, wozu er Istwerte und von einem digitalen Steuerungsteil Sollwerte erhält, die im Regelungsteil erfolgenden Soll-Istwert-Vergleichen zugrundegelegt werden, und bei dem Positions-Istwerte des Motors berücksichtigt werden.

Zur Steuerung von Elektromotoren, welche beispielsweise die Achsen einer spanenden Werkzeugmaschine bilden, ist es allgemein bekannt, das vorstehende Verfahren zu benutzen. Der digitale Steuerungsteil ist ein sogenannter CNC-Rechner. Der digitale Regelungsteil ist ebenfalls ein Rechner und mit dem CNC-Rechner über eine hardwaremäßige Schnittstelle verbunden. Der Regelungsrechner beaufschlagt einen Steller, der die Signale des Regelungsrechners so verstärkt, daß der Elektromotor entsprechend den Signalen des Regelungsrechners gesteuert wird. Der Elektromotor ist mit einem Drehgeber verbunden, der Positions-Istwerte des Elektromotors an den CNC-Rechner und an den Regelungsrechner übermittelt. Beide Rechner berechnen aus den Positions-Istwerten des Motors für ein bestimmtes kurzes Zeitintervall einen Istwert für die Drehgeschwindigkeit des Motors. Mit den Geschwindigkeits-Istwerten des Motors errechnet der Regelungsrechner unter Verwendung der ihm von dem CNC-Rechner übermittelten Geschwindigkeitssollwerte Signale für den Steller. Bei einer solchen Regelung ist es grundsätzlich so, daß der Motor die Solldrehgeschwindigkeit nicht erreichen kann, weil er aufgrund von Belastungen daran gehindert wird, z.B. aufgrund der Reibungsbelastungen der Lager für den Rotor des Motors. Infolgedessen ist der Elektromotor nach einer bestimmten Zeit nicht an der für ihn zu dem bestimmten Zeitpunkt vorgesehenen Position. Das hätte bei einer spanenden Werkstückbearbeitung die Folge, daß die gewünschte Zerspanungsform nicht erreicht wird. Infolgedessen berechnet der CNC-Rechner dem die tatsächliche Drehposition des Elektromotors bzw. die tatsächliche Drehgeschwindigkeit durch die Meßwerte des Drehgebers bekannt ist, eine etwas höhere Sollgeschwindigkeit, also beispielsweise statt 100% nun 102%. Damit soll erreicht werden, daß der Elektromotor tatsächlich die gewünschte Drehgeschwindigkeit erreicht und auch, daß die Drehpositionen zu den gewünschten Zeitpunkten eingenommen werden.

Bei dem bekannten Verfahren ist zunächst von Nachteil, daß es mit baulich voneinander unabhängigen Rechnern durchgeführt wird, nämlich dem CNC-Rechner und dem davon konstruktiv unabhängigen Regelungsrechner. Der bauliche Aufwand ist dementsprechend hoch. Es ist eine mechanische Schnittstelle vorhanden, so daß die Rechner zu ihrer Verknüpfung jeweils entsprechende Schnittstellenglieder brauchen, der CNC-Rechner beispielsweise einen Digital-Analog-Wandler und der Regelungsrechner z.B. einen Analog-Digital-Wandler. Beide weisen jeweils ein Energieversorgungssystem auf usw. Darüber hinaus ist die funktionsmäßige Verknüpfung der beiden Rechner derart, daß dem Regelungsrechner vom CNC-Rechner lediglich Geschwindigkeits-Sollwerte vorgegeben werden. Mit diesen Geschwindigkeits-Sollwerten müssen also, wie oben beschrieben, auch Drehpositionen des Elektromotors beeinflußt werden. Infolgedessen können in Abhängigkeit vom Einsatz des Verfahrens erhebliche Schwankungen des Geschwindigkeits-Sollwerts auftreten. Solche Schwankungen sind dem Verstärkungsfaktor des Regelungsteils proportional. Infolgedessen kann es beim Ausregeln verstärkt zu Schwingungsvorgängen kommen. Schwingungsvorgänge, z.B. Überschwingungsvorgänge, sind unerwünscht und führen zu Ungenauigkeiten bezüglich des gewünschten Geschwindigkeitsverlaufs und bezüglich des gewünschten Positionsverlaufs. Mit Hilfe des bekannten Verfahrens läßt sich also eine Steuerung von Elektromotoren häufig nur in unvollkommenem Ausmaß erreichen. Das gilt insbesondere, wenn eine Verknüpfung mehrerer Elektromotoren erforderlich ist, wie beispielsweise bei einer spanenden Werkzeugmaschine mit mehreren von den Elektromotoren gebildeten Achsen.

Der Erfindung liegt daher die Aufgabe zugrunde, ein Verfahren mit den eingangs genannten Verfahrensschritten so zu verbessern, daß eine erhöhte Steuerungsgenauigkeit erreicht wird, insbesondere bei funktioneller Verknüpfung mehrerer Elektromotoren für eine spanende Werkzeugmaschine.

Diese Aufgabe wird dadurch gelöst, daß der digitale Regelungsteil und der digitale Steuerungteil für die Ist- und Sollwertübermittlung betreffende Datentransfers softwaremäßig verknüpft werden, daß der digitale Regelungsteil vom digitalen Steuerungteil frei vorbestimmbare Korrekturfaktoren übermittelt erhält, und daß der digitale Regelungsteil diese Korrekturfaktoren mit von Soll-Istwert-Differenzen abhängigen Größen multipliziert und mit mindestens einem Produkt dieser Multiplikationen den Motorstrom beeinflußt.

Für die Erfindung ist zunächst von Bedeutung, daß der digitale Regelungsteil und der digitale Steuerungsteil softwaremäßig verknüpft werden. Das Verfahren wird also mit Steuerungs- und Regelungsteilen durchgeführt, die unter einem Rechenprogramm oder die unter mehreren Rechenprogrammen zusammenwirken. Die Software bzw. ein Rechenprogramm kann so ausgelegt werden, daß es das Steuerungsverfahren in besonders vorteilhafter Weise durchführt, verglichen mit den bisher bekannten Steuerungsverfahren. Die softwaremäßige Verknüpfung des digitalen Steuerungsteils und des digitalen Regelungsteils führt insbesondere dazu, daß alle Nachteile entfallen, die sich aus der bei den bekannten Verfahren gegebenen hardwaremäßigen Trennung des Steuerungs- und des Regelungsteils ergeben. Beispielsweise entfällt eine Ausbildung des Steuerungsteils und des Regelungsteils im Hinblick auf eine hardwaremäßige Schnittstelle, es entfallen z.B. Wandler in den Teilen sowie Kabel und Stecker. Der Regelungsteil braucht nicht als externer Regeler ausgeführt zu werden, der ein besonderes Gehäuse, ausschließlich auf ihn abgestimmte Stromversorgung usw. erfordert. Das Verfahren kann also in einem einzigen Rechner durchgeführt werden.

Funktionsmäßig folgt aus der softwaremäßigen Verknüpfung des Steuerungsteils und des Regelungsteils eine grundsätzliche Verbesserung der Steuerung im Hinblick auf die Steuerungsgeschwindigkeit und im Hinblick auf die Steuerungsgenauigkeit. Insbesondere werden sämtliche Kommunikationsprobleme zwischen den beiden Teilen vermieden. Es ist möglich, die Programme für den Steuerungsteil und für den Regelungsteil zu vereinfachen, sie aufeinander abzustimmen bzw. zu vereinheitlichen. Beispielsweise können beide Teile problemlos auf dieselben Daten zugreifen.

Von weiterer Bedeutung ist, daß der digitale Regelungsteil vom digitalen Steuerungsteil frei vorbestimmbare Korrekturfaktoren übermittelt erhält. Die freie Vorbestimmbarkeit der Korrekturfaktoren bedeutet insbesondere, daß diese Faktoren unabhängig von anderen Steuerungs- oder Regelungsvorgängen gewählt werden können. Beispielsweise kann ein Korrekturfaktor zu Null vorbestimmt werden, so daß das von diesem Korrekturfaktor beeinflußte Produkt Null wird, beispielsweise das Produkt dieses Korrekturfaktors mit der von der Soll-Istwert-Differenz abhängigen Größe, wodurch ein frei vorbestimmbares Regelungsverhalten des Regelungsteils resultiert. Es ist offensichtlich, daß durch die Vorbestimmung der Korrekturfaktoren und damit durch die Vorbestimmung des Regelungsverhaltens bzw. der Regelungsparameter erwünschte Steuerungswirkungen erzielbar sind. Als Beispiel sei eine verbesserte Genauigkeit und/oder ein niedrigerer Energieverbrauch genannt.

Die Verwendung von von der Soll-Istwert-Differenz abhängigen Größen bedeutet, daß die Regelung nicht mehr strikt an die Soll-Istwert-Differenz als solche gebunden ist, sondern daß auch davon abhängige Größen für die Regelung herangezogen werden können, also solche Größen, die unter Verwendung von Soll-Istwert-Differenzen nach vorgegebenen Kriterien bestimmt worden sind. Mit Hilfe dieser Kriterien läßt sich also Einfluß auf die Regelung nehmen, beispielsweise im Sinne einer verbesserten Genauigkeit bei der Berechnung im Regelungsfall.

Vorteilhafterweise wird das Verfahren so durchgeführt, daß eine Berechnung der von Soll-Istwert-Differenzen abhängigen Größen nach folgender Beziehung durchgeführt wird:

$$S(y) = \text{sgn}(y) \times \text{Polynom } n\text{-ten Grades in } |y|,$$

und/oder

$$V(y) = \text{sgn}(y) \times \text{Polynom } n\text{-ten Grades in } |y|,$$

mit

$S(y)$ = Regelfunktion für die Drehposition (s) des Elektromotors,

$V(y)$ = Regelfunktion für die Drehgeschwindigkeit (v) des Elektromotors,

$\text{sgn}(y)$ = Vorzeichen von y,

$n$ = $\geq 1$,

$|y|$ = Absolutwertbildung von y, wobei

$y$ - $s_{soll}(t) - s_{ist}(t) = \Delta s$ oder $v_{soll}(t) - v_{ist}(t) = \Delta v$ gilt, mit

$s_{soll}(t)$ = Drehpositions-Sollwert als Funktion der Zeit (t),

$v_{soll}$ = Geschwindigkeits-Sollwert als Funktion der Zeit (t), und mit

$s_{ist}(t)$ = zeitabhängiger Drehpositions-Istwert,

$v_{ist}(t)$ = zeitabhängiger Geschwindigkeits-Istwert.

Die von den Soll-Istwert-Differenzen abhängigen Größen sind demnach Regelungsfunktionen für die Drehgeschwindigkeit und/oder für die Drehposition des Elektromotors. Diese Grössen bzw. Funktionen sind wählbar. Zum einen kann also gewählt werden, ob das Verfahren z.B. lediglich eine Geschwindigkeitsregelung betrifft, oder lediglich eine Drehpositionsregelung, oder aber beides zu gleicher Zeit. Darüber hinaus können die jeweiligen Regelungsfunktionen dadurch beeinflußt werden, daß der Grad n des Polynoms gewählt wird. Je höher der Grad ist, desto genauer erfolgt die Berechnung. Die Wahl eines Grades n > 1 erfolgt dann, wenn eine lineare Berechnung im Hinblick auf eine gewünschte Genauigkeit nicht ausreichend ist.

Wenn ein Polynom zweiten Grades verwendet wird, ist die Genauigkeit der Berechnung im Vergleich zu einer linearen Berechnung bereits erheblich gesteigert, jedoch ohne daß zu dieser Berechnung ein ungerechtfertigt hoher Mehraufwand für die Berechnung erforderlich wäre.

Sofern die Steuerung des Elektromotors nicht mit konstanter Geschwindigkeit durchgeführt werden soll, kann so verfahren werden, daß eine Berechnung der von Soll-Istwert-Differenzen abhängigen Größen unter zusätzlicher Addition folgender Beziehung durchgeführt wird:

$B(y)$ = $k_b \times b_{soll}(t)$,
mit

$B(y)$ = Regelfunktion für die Beschleunigung (b) des Elektromotors,

$k_b$ = Korrekturfaktor, abhängig von den baulichen Gegebenheiten des Elektromotors,

$b_{soll}(t)$ = zeitabhängiger Beschleunigungs-Sollwert.

Es wird also eine Regelfunktion für die Beschleunigung berechnet und der von der Soll-Istwert-Differenz abhängigen Größe bzw. mehreren von Soll-Istwert-Differenzen abhängigen Größen addiert. Infolgedessen werden Fehler bei der Steuerung vermieden, die sich sonst bei den herkömmlichen Verfahren einstellen, weil dort eine Beschleunigung des Elektromotors nicht gesteuert werden kann.

Es ist auch möglich, das Verfahren so durchzuführen, daß die Multiplikation der Korrekturfaktoren mit den von Soll-Istwert-Differenzen abhängigen Größen nur bei unbeschleunigter Drehbewegung des Elektromotors unter zusätzlicher Addition eines Integralanteils durchgeführt wird. Auf diese Weise wird mit dem Integralanteil eine Abweichung der Position und/oder der Geschwindigkeit vom vorgegebenen Sollwert vermieden.

Um die Berechnung des Integralanteils beeinflussen zu können, beispielsweise im Sinne einer schnellen Integration, wird so verfahren, daß der Integralanteil wie folgt ermittelt wird:

$I_{aus}(t)$ = $I_{ein}(t) + I_0(t)$
wobei

$I_{aus}$ = der Steuerung des Motorstroms dienender Integralanteil

$I_{ein}$ = zur Berechnung des Integralanteils vorgegebener Wert, z.B. erhalten durch Addition von $S(y) + V(y)$,

$I_0$ = Nullpunktsanteil,
mit

$I_0$ = $I_{0,alt} + KI \times I_{ein}$,
wobei

$I_{0,alt}$ = Nullpunktsanteil eines vorhergegangenen Berechnungszyklus, und

$KI$ = Integrationsfaktor, << 1.

Der Integrationsfaktor KI kann möglichst groß gewählt werden, um den auszuregelnden Motorstrom möglichst schnell auf den gewünschten Wert zu steuern. Andererseits darf er nicht zu groß gewählt werden, weil sonst unerwünschte Schwingungsvorgänge des Elektromotors bei dessen Übergang vom Ausgangszustand in den gewünschten Zustand auftreten können. Der Integrationsfaktor kann so gewählt werden, daß ein Optimum an Schnelligkeit bei ausreichender Stabilität erreicht wird.

Besondere Vorteile ergeben sich dadurch, daß bei einer Steuerung des Motorstroms unter Berücksichtigung der Drehposition des Elektromotors eine Rückführung von Regelungsdaten des digitalen Regelungsteils an den digitalen Steuerungsteil erfolgt. Der Steuerungsteil kann also ohne erheblichen baulichen Aufwand stets über Regelungsdaten verfügen, ohne daß außerhalb des den digitalen Steuerungsteil und den digitalen Regelungsteil bildenden Rechners eine Meßgrößenerfassung erforderlich ist. Das bedeutet eine sehr erhebliche Vereinfachung, insbesondere bei komplizierten Steuerungen, wenn diese an sich auf äußere Ereignisse zu reagieren hätten. Beispielsweise ist unter der Voraussetzung der vorbeschriebenen Rückführung von Regelungsdaten des digitalen Regelungsteils an den digitalen Steuerungsteil insbesondere eine verbesserte Abstimmung des Verhaltens mehrerer Elektromotoren bzw. mehrerer Achsen einer Werkzeugmaschine ermöglicht. Es werden rechnerische Interpolationen zwischen beliebigen Achsen ermöglicht und innerhalb des einzigen Rechners schnell und vor allem genau durchführbar. Insbesondere hieraus ergibt sich eine erhebliche Verbesserung und Beschleunigung der Steuerung eines Mehrachsensystems.

Weitere erhebliche Verbesserungen ergeben sich bei der Steuerung von Elektromotoren dann, falls bei einer Regelung des Motorstroms unter Berücksichtigung der Drehposition des Elektromotors eine Beeinflussung des Steuerungsvorgangs erfolgt, wenn im digitalen Steuerungsteil mit Hilfe der rückgeführten Regelungsdaten des digitalen Regelungsteils eine Abweichung eines vorbestimmten Wertes des Motorstroms erkannt wird. Je nach Art der Abweichung können geeignete Maßnahmen manuell oder automatisch eingeleitet werden, beispielsweise ein Eingriff in die Steuerung durch Abschaltung, eine Veranlassung einer externen Positionsüberwachung oder dergleichen.

Es braucht nicht notwendigerweise bei einem Bearbeitungs- oder Handhabungsvorgang ausschließlich nach einem der vorbeschriebenen Verfahren gearbeitet werden. Vielmehr kann es in Abhängigkeit von dem jeweiligen Anwendungsfall vorteilhaft sein, daß das Verfahren zur Steuerung von Elektromotoren zeitabschnittweise abwechselnd nach einem oder mehreren der vorbeschriebenen Verfahren durchgeführt wird.

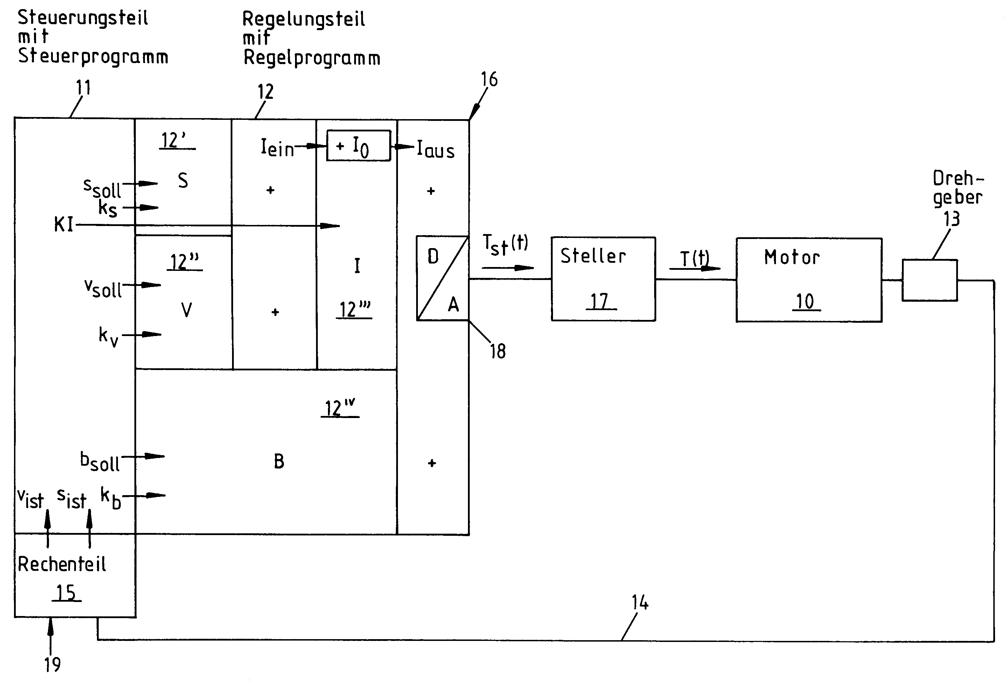

Die Erfindung wird anhand eines in der Figur dargestellten Blockschaltbildes erläutert.

In der Zeichnung sind die zur Erläuterung des Verfahrens wichtigsten Bauelemente schematisch dargestellt. Zu steuerndes Bauelement ist ein Elektromotor 10. Dieser ist beispielsweise der Drehantrieb für einen Werkstückträger, der von dem Elektromotor in vorbestimmter zeitlicher Abhängigkeit verstellt werden soll. Es ist aber auch möglich, daß der Elektromotor einer von mehreren Stellmotoren an Schwenkhalterungen eines Werkzeugträgers ist, vgl. z.B. Gebrauchsmuster 90 06 628. Die Ausbildung und der Einsatz des Motors 10 bei Werkzeugmaschinen kann also beliebig sein, sofern es darauf ankommt, ihn zu steuern. Der vorerwähnte Einsatz des Motors 10 an Mehrachsen-Werkzeugmaschinen läßt erkennen, daß die im Folgenden beschriebene Steuerung nicht nur für einen einzigen Motor 10 verwendbar ist, sondern auch bei der gleichzeitigen Steuerung mehrerer Motoren und sogar bei der Steuerung mehrerer Maschinen, wobei vorausgesetzt wird, daß die Steuereinrichtung im erforderlichen Maße mit einer Vielzahl von geeigneten Verknüpfungsmitteln z.B. für mehrere Regelungsteile versehen ist. Darüber hinaus ist der Motor 10 nicht nur an Werkzeugmaschinen zu verwenden, sondern auch an Handhabungsmaschinen wie Greifrobotern. Auch der Einsatz an anderen Arbeitsmaschinen ist möglich, vor allem wenn es dabei auf eine schnelle und genaue Steuerung eines Motors ankommt.

Der Motor 10 beaufschlagt einen Drehgeber 13, der beispielsweise als Inkrementalgeber ausgebildet ist. Dessen Signale werden über eine Verbindungsleitung 14 einem Rechenteil 15 zugeführt, der Bestandteil eines Rechners 16 ist. Der Rechner 16 hat einen Steuerungsteil 11 und einen Regelungsteil 12 und beaufschlagt über einen Digital-Analogwandler einen Steller 17, also einen Leistungsteil, welcher dem Motor 10 einen durch den Rechner 16 vorbestimmten Motorstrom T(t) aufzwingt. Bereits aus dieser blockschaltbildartigen Darstellung aller an der Steuerung beteiligten Bauteile ist ersichtlich, daß das Steuerungsverfahren mit einem einzigen Rechner 16 durchgeführt werden kann. Voraussetzung dafür ist die wirkungsmäßige Verknüpfung des Steuerungsteils 11 und des Regelungsteils 12 über eine geeignete Software. Hierunter wird die Programmierung des Rechners verstanden, der unter anderem ein den Steuerungsteil 11 bildendes Steuerprogramm hat, wie auch ein den Regelungsteil 12 bildendes Regelprogramm. Der Rechenteil 15 des Rechners 16 erhält vom Drehgeber 13 die Istpositionen des Motors 10 in Abhängigkeit von der Zeit, also $S_{ist}(t)$. Anhand der Istwerte $S_{ist}(t)$ kann der Rechenteil 15 die tatsächliche Drehgeschwindigkeit des Elektromotors 10 bestimmen, also $v_{ist}(t)$. Die Istwerte $s_{ist}$ und $v_{ist}$ werden sowohl dem Steuerungsteil 11, als auch dem Regelungsteil 12 zur Verfügung gestellt, indem beide Zugriff auf einen gemeinsamen Datenspeicher für diese Istwerte haben.

Die Regelung des Elektromotors 10 kann sich wahlweise auf eine oder mehrere Funktionen des Motors beziehen. Eine dieser Funktionen ist die Geschwindigkeit v(t). Eine weitere Funktion ist die Drehposition s(t) und als dritte Funktion in Abhängigkeit von der Zeit kann die Beschleunigung b(t) angesehen werden. Um diese Funktionen v(t), s(t) und b(t) einzeln oder wahlweise zu mehreren regeln zu können, werden dem Regelungsteil entsprechende Sollwerte $v_{soll}(t)$, $s_{soll}(t)$ und $b_{soll}(t)$ zur Verfügung gestellt. Dies ist in der Zeichnung durch die an den entsprechenden Größen vorgesehenen Pfeile veranschaulicht. Bei den Verfahren ist es also möglich, dem Regelungsteil bis zu drei Sollwerte zur Verfügung zu stellen, was natürlich eine erhebliche Flexibilisierung des Steuerungsverfahren bedeutet, wenn man bedenkt, daß eine herkömmliche Steuerung nur einen einzigen ausgibt, nämlich den oben beschriebenen Geschwindigkeitssollwert $v_{soll}(t)$.

Mit Hilfe der Sollwerte $v_{soll}(t)$, $s_{soll}(t)$ und/oder $b_{soll}(t)$ kann der Regelungsteil 12 unter Verwendung vorzugebender Regelungsfunktionen Steuerwerte $T_{st}(t)$ errechnen und über den Digital-Analog-Wandler 18 an den Steller 17 abgeben, der die Werte $T_{st}(t)$ zu den Stromwerten T(t) für den Motor 10 verstärken. Diese Regelungsfunktionen werden V(y), S(y) und B(y) genannt, sind also Regelungsfunktionen für die Geschwindigkeit v, die Drehposition s und die Beschleunigung b des Elektromotors 10. Für die Variablen y der Regelungsfunktionen V,S,B gilt:

V:  $y = v_{soll}(t) - v_{ist}(t) = \Delta v$

S:  $y = s_{soll}(t) - S_{ist}(t) = \Delta s$ und

B:  $y = b_{soll}(t)$.

Diese Funktionen bzw. Berechnungsvorschriften liefern also folgende Ergebnisse:

Geschwindigkeitsanteil V(y): Halte die Geschwindigkeit v(t) möglichst nahe an der Sollgeschwindigkeit $v_{soll}(t)$.

Drehpositionsanteil S(y): Halte die Drehposition s(t) möglichst nahe an der Sollposition $s_{soll}(t)$.

Beschleunigungsanteil B(y): Halte die Beschleunigung b(t) möglichst nahe an der Sollbeschleunigung $b_{soll}(t)$.

Die Regelungsfunktionen V(y) und S(y) können wie folgt berechnet werden:

V(y)  = sgn(y) x Polynom n-ten Grades in $|y|$

S(y)  = sgn(y) x Polynom n-ten Grades in $|y|$.

Mit Hilfe dieser Regelungsfunktionen ergibt sich infolge der Absolutwertbildung für die Variable y eine Nullpunktssymmetrie für Vorwärtsregelungen, bei denen das Vorzeichen sgn(y) positiv ist, und für Rückwärtsregelungen, bei denen das Vorzeichen sgn(y) negativ ist.

Die vorgenannten Regelungsfunktionen V(y) und S(y) lassen sich durch Variationen des Grades n des Polynoms beeinflussen. Je höher der Grad n ist, desto genauer ist die Berechnung. Wird n = 1 gewählt, so ergibt sich für V(y):

$$V(y) = v_{soll}(t) - v_{ist}(t) = \Delta v$$

V(y) kann als von Soll-Istwert-Differenzen abhängige Größe auch mittels eines Polynoms zweiten Grades berechnet werden, so daß sich eine von Soll-Istwert-Differenzen abhängige Größe V(y) oder S(y) ergibt, in der Δv bzw. As entsprechend korrigiert ist.

Infolgedessen stellen sich die Regelungsfunktionen im linearen Fall wie folgt dar:

$$S(y) = k_p \times \Delta p; \quad V(y) = k_v \times \Delta v \text{ und } B(y) = k_b \times b_{soll}(t).$$

Als weitere Funktion wird der Integralanteil I(s,v) eingeführt, mit dem Regelabweichungen beseitigt werden. Der Integralanteil regelt also bezüglich der Drehposition des Elektromotors 10 auf ein zeitliches Minimum des Schleppabstandes.

Die Verknüpfung der Regelungsfunktionen erfolgt additiv nach folgender Beziehung:

$$T_{st}(t) = k_v \times \Delta v + k_s \times \Delta s + k_b \times b_{soll}(t) + I_0$$

Die Stellgröße $T_{st}(t)$ berechnet sich also additiv aus Produkten der Soll-Istwert-Differenzen oder von den Soll-Istwert-Differenzen abhängigen Größen mit entsprechend zuzuordnenden Korrekturfaktoren und gegebenenfalls einem Integralanteil $I_0$. Diese Korrekturfaktoren $k_v, k_s$ und $k_b$ sind frei wählbar und werden dem Regelungsteil 12 gemäß der schematischen Darstellung vom Steuerungsteil zur Verfügung gestellt. Ihre Größe richtet sich einerseits nach der Art des Regelungsverfahrens, welches durchgeführt werden soll, andererseits nach dessen Qualität. Beispielsweise kann $k_b = 0$ sein, wenn lediglich die Geschwindigkeit und/oder die Drehpositionen des Elektromotors 10 geregelt werden sollen.

Die vorstehend beschriebenen Regelungsmöglichkeiten ergeben sich aus der Zeichnung, wo der Regelungsteil 12 einen Drehpositionsteil 12' und einen Geschwindigkeitsteil 12'' aufweist, deren Rechenergebnisse addiert und in den Integralteil 12''' gegeben werden. Zum Rechenergebnis dieses Integralteils 12''' wird das Rechenergebnis des parallelen Beschleunigungsteils 12^IV addiert. Die Summe wird als Stellgröße $T_s(t)$ durch den Digital-Analog-Wandler 18 auf den Steller 17 übertragen.

Aus der Darstellung läßt sich ableiten, daß der Integralteil 12''' zwar mit den Teilen 12',12'' zusammenwirkt, nicht aber mit dem Beschleunigungsteil 12^IV. Sofern eine Steuerung der Beschleunigung vorgesehen ist, wird die Regelgröße für den Integralanteil I(s,v) abgeschaltet bzw. die Addition dieses Integralanteils erfolgt nur bei unbeschleunigter Drehbewegung des Elektromotors 10.

Die Berechnung des Integralanteils I(s,v) wird mit folgender Beziehung ermittelt:

$$I_{aus}(t) = I_{ein}(t) + I_0(t)$$

$I_{aus}$ ist ein der Steuerung des Motorstroms dienender Integralanteil, der unter Zufügung eines Nullpunktsanteils $I_0$ mit einem Eingangswert $I_{ein}$ berechnet wird, der dem Teil 12''' vorgegeben wird. $I_{ein}$ ist ein bestimmter vorgegebener Wert, der beispielsweise durch die Regelungsfunktion S(y) oder V(y) bzw. durch die Addition beider erhalten wird. Der Nullpunktsanteil ändert sich in Abhängigkeit von dem der Integralanteilsberechnung vorgegebenen Wert $I_{ein}$ nach folgender Beziehung:

$$I_0 = I_{0,alt} + KI \times I_{ein}$$

In dieser Beziehung ist $I_{0,alt}$ der Nullpunktsanteil eines vorhergegangenen Berechnungszyklus und KI ein Integrationsfaktor, der sehr viel kleiner als 1 gewählt wird.

Es versteht sich, daß die sich aus der vorstehenden Beziehung für $T_{st}(t)$ ergebenden Verfahrensmöglichkeiten wahlweise zeitlich nacheinander ablaufen können. Beispielsweise kann $T_{st}(t)$ zunächst lediglich durch den Geschwindigkeitsanteil $k_v \times \Delta v$ bestimmt werden, nach einer gewissen Zeit dann unter zusätzlicher Addition der Produktgröße $k_s \times \Delta s$ und anschließend ohne diese Produktgröße. Der Zugriff auf die rechnerische Bestimmung von $T_s(t)$ ist entsprechend der Regelungsaufgabe frei wählbar.

Darüber hinaus erlaubt die Steuerung, flexibel auf äussere Ereignisse zu reagieren. Es ist lediglich erforderlich, daß Sensoren verwendet werden, deren Ausgangsgrößen im Steuerungsteil 11 Entscheidungskriterien liefern. Eine derartige Außeneinspeisung ist in der Zeichnung mit 19 symbolisiert. Hierbei handelt es sich um eine parallele oder serielle Schnittstelle mit dem steuerungsseitig erforderlichen Timing. Beispielsweise kann die Positionserkennung eines eingespannten Werkstücks durch eine Lichtschranke benutzt werden, um den Regelungsvorgang über das Steuerungsteil 11 zu beginnen.

Das Programm des Rechners 16 bzw. die erforderlichen Steuer- und Regelprogramme sind in einer auf die anfallenden Steuerungs- und Regelprobleme abgestimmten höheren Programmiersprache geschrieben. Als besonders geeignet hat sich dabei die Programmiersprache "C" erwiesen. Eine darauf basierende speziell entwickelte multitaskingfähige Programmiersprache, deren Befehlssatz zur Vermeidung von Abstürzen eingeschränkt wurde, erlaubt unter anderem folgende Zugriffe:
Programmierte Positionen, Geschwindigkeiten, Beschleunigung, Drehmomente;
Tatsächliche Positionen, Geschwindigkeiten, Beschleunigung, Drehmomente;

Maximale Positionen, Geschwindigkeiten, Beschleunigung, Drehmomente;
Minimale Positionen (Verfahrbereich);
Zeitvariable;

Der Rechner 16 bzw. dessen Programmierung erlaubt dementsprechend eine Rückführung von Regelungsdaten des digitalen Regelungsteils an den digitalen Steuerungsteil. Für den Berechnungsvorgang und damit für den Regelungsvorgang werden daher offensichtlich verbesserte Einflußmöglichkeiten erreicht. Der Rechner 16 vermag nicht nur äußere Ereignisse zu registrieren und bei der Regelung zu berücksichtigen, sondern auch mit rückgeführten Regelungsdaten den Motorstrom zu beeinflussen, wenn eine Abweichung eines vorbestimmten Wertes des Motorstroms erkannt wird. Auf diese Weise wird der Elektromotor zum Sensor. Aus den rückgeführten Regelungsdaten kann in Verbindung mit der Berücksichtigung der Drehposition des Elektromotors eine wünschenswerte Beeinflussung des Steuervorgangs erfolgen. Der Motor erhält eine Sensibilität, indem sein Drehmoment stufenlos begrenzt oder eingestellt werden kann. Wird beispielsweise durch den Drehgeber 13 eine Abweichung eines vorbestimmten Wertes des Motorstroms $T(t)$ im Sinne einer notwendigen Erhöhung zur Beibehaltung der Geschwindigkeit erkannt, so kann das beispielsweise auf einen Verschleiß eines Schneidwerkzeugs deuten. Man wird also den Steuerungsvorgang unterbrechen, wenn die ermittelte Abweichung einen Grenzwert überschreitet. Tritt die Abweichung mit einer bestimmten Geschwindigkeit auf und/oder wird bei der Regelung eine maximale Abweichung überschritten, so kann das als Bruchgefahr gewertet werden. Die Regelung wird stillgesetzt und das Werkzeug kann überprüft werden.

Der Rechner 16 kann entsprechend seiner Programmierung verschiedene Aufgaben zeitgleich ausführen, erforderlichenfalls auch mit voneinander unabhängigen Programmen. Die Steuerung ist infolgedessen in der Lage, verschiedene Achsen einer Werkzeugmaschine gleichzeitig zu steuern und sogar mehrere Maschinen und/oder Roboter zu steuern, selbst wenn diese völlig verschiedene Anwendungen betreffen. Der Zugriff des Steuerungsteils auf die rückgeführten Daten des Regelungsteils ermöglicht insoweit sehr große Freiheiten bei der Steuerung von komplizierten Bearbeitungsvorgängen und Herstellungs/Handhabungsvorgängen.

**Patentansprüche**

1. Verfahren zur Steuerung von Elektromotoren (10) für Werkzeug- und Handhabungsmaschinen, insbesondere für spanende Werkzeugmaschinen, bei dem der Motorstrom (T) mindestens eines Elektromotors (10) mit einem digitalen Regelungsteil (11) berechnet wird, wozu er Istwerte und von einem digitalen Steuerungsteil (12) Sollwerte erhält, die im Regelungsteil (11) erfolgenden Soll-Istwert-Vergleichen zugrundegelegt werden, und bei dem Positions-Istwerte des Motors (10) berücksichtigt werden, **dadurch gekennzeichnet,** daß der digitale Regelungsteil (11) und der digitale Steuerungteil (12) für die Ist- und Sollwertübermittlung betreffende Datentransfers softwaremäßig verknüpft werden, daß der digitale Regelungsteil (11) vom digitalen Steuerungteil (12) frei vorbestimmbare Korrekturfaktoren (z.B. $k_v, k_s$) übermittelt erhält, und daß der digitale Regelungsteil (11) diese Korrekturfaktoren ($k_v, k_s$) mit von Soll-Istwert-Differenzen abhängigen Größen (z.B. $S(y)$) multipliziert und mit mindestens einem Produkt dieser Multiplikationen den Motorstrom (T) beeinflußt.

2. Verfahren nach Anspruch 1, **dadurch gekennzeichnet,** daß eine Berechnung der Soll-Istwert-Differenzen abhängigen Größen (z.B. $S(y)$) nach folgender Beziehung durchgeführt wird:

$S(y)$ = sgn(y) x Polynom n-ten Grades in $|y|$,
und/oder

$V(y)$ = sgn(y) x Polynom n-ten Grades in $|y|$,
mit

$S(y)$ = Regelfunktion für die Drehposition (s) des Elektromotors,

$V(y)$ = Regelfunktion für die Drehgeschwindigkeit (v) des Elektromotors,

sgn(y) = Vorzeichen von y,

n = $\geq 1$,

$|y|$ = Absolutwertbildung von y,
wobei

y = $s_{soll}(t) - s_{ist}(t) = \Delta s$ oder
$v_{soll}(t) - v_{ist}(t) = \Delta v$ gilt,
mit

$s_{soll}(t)$ = Drehpositions-Sollwert als Funktion der Zeit (t),

$v_{soll}(t)$ = Geschwindigkeits-Sollwert als Funktion der Zeit (t), und
mit

$s_{ist}(t)$ = zeitabhängiger Drehpositions-Istwert,

$v_{ist}(t)$ = zeitabhängiger Geschwindigkeits-Istwert.

3. Verfahren nach Anspruch 2, **dadurch gekennzeichnet,** daß ein Polynom zweiten Grades verwendet wird.

4. Verfahren nach Anspruch 2 oder 3, **dadurch**

**gekennzeichnet,** daß eine Berechnung der Soll-Istwert-Differenzen abhängigen Größen unter zusätzlicher Addition folgender Beziehung durchgeführt wird:

$B(y) = k_b \times b_{soll}(t)$,
mit

$B(y)$ = Regelfunktion für die Beschleunigung (b) des Elektromotors,

$k_b$ = Korrekturfaktor, abhängig von den baulichen Gegebenheiten des Elektromotors,
und mit

$b_{soll}(t)$ = zeitabhängiger Beschleunigungs-Sollwert.

5. Verfahren nach einem oder mehreren der Ansprüche 1 bis 3, **dadurch gekennzeichnet,** daß die Multiplikation der Korrekturfaktoren (z.B. $k_v, k_p$) mit den Soll-Istwert-Differenzen abhängigen Größen (z.B. $S(y)$) nur bei unbeschleunigter Drehbewegung des Elektromotors unter zusätzlicher Addition eines Integralanteils $(I(s,v))$ durchgeführt wird.

6. Verfahren nach Anspruch 5, **dadurch gekennzeichnet,** daß der Integralanteil $(I(s,v))$ wie folgt ermittelt wird:

$I_{aus}(t) = I_{ein}(t) + I_0(t)$
wobei

$I_{aus}$ = der Steuerung des Motorstroms dienender Integralanteil

$I_{ein}$ = zur Berechnung des Integralanteils vorgegebener Wert, z.B. erhalten durch Addition von $S(y)$ + $V(y)$,

$I_0$ = Nullpunktsanteil,
mit

$I_0$ = $I_{0,alt}$ + $KI \times I_{ein}$,
wobei

$I_{0,alt}$ = Nullpunktsanteil eines vorhergegangenen Berechnungszyklus,
und

$KI$ = Integrationsfaktor, << 1.

7. Verfahren nach einem oder mehreren der Ansprüche 1 bis 5, **dadurch gekennzeichnet,** daß bei einer Steuerung des Motorstroms (T) unter Berücksichtigung der Drehposition des Elektromotors (10) eine Rückführung von Regelungsdaten (z. B. $S(y)$) des digitalen Regelungsteils (11) an den digitalen Steuerungsteil (12) erfolgt.

8. Verfahren nach einem oder mehreren der Ansprüche 1 bis 7, **dadurch gekennzeichnet,** daß bei einer Regelung des Motorstroms (T) unter Berücksichtigung der Drehposition des Elektromotors (10) eine Beeinflussung des Steuerungsvorgangs erfolgt, wenn im digitalen Steuerungsteil (12) mit Hilfe der rückgeführten Regelungsdaten des digitalen Regelungsteils (11) eine Abweichung eines vorbestimmten Wertes des Motorstroms (T) erkannt wird.

9. Verfahren nach einem oder mehreren der Ansprüche 1 bis 8, **dadurch gekennzeichnet,** daß es zeitabschnittweise abwechselnd nach einem oder mehreren der vorbeschriebenen Verfahren durchgeführt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PROCEEDINGS TENCON 87<br>Bd. 3/3, 28. August 1987, TOYOHASHI AICHI,JAPAN 440<br>Seiten 1145 - 1149;<br>YOZO SHIMADA ET AL: 'Development of all software servo system with uPD 78310'<br>* Seite 1145, linke Spalte, Absatz 1 - Seite 1146, linke Spalte, Absatz 2 *<br>* Seite 1148, linke Spalte, Absatz 1 - Seite 1148, rechte Spalte, letzter Absatz; Abbildungen 1-3,6 *<br>--- | 1,7,8 | G05B19/403 |
| A | COMPUTER TECHNOLOGY REVIEW<br>Bd. 7, Nr. 16, Dezember 1987, LOS ANGELES ,USA<br>Seiten 69 - 73;<br>PHILIP R. CHIMES ET AL: 'Factory Automation Gains From Controllers Offering Multitasking Capabilities'<br>* Seite 69, linke Spalte, Absatz 1 - Seite 73, linke Spalte, Absatz 1; Abbildungen 1,2 *<br>----- | 1 | |

**RECHERCHIERTE SACHGEBIETE (Int. Cl.5)**

G05B

Der vorliegende Recherchenbericht wurde für alle Patentansprüche erstellt

| Recherchenort | Abschlußdatum der Recherche | Prüfer |
|---|---|---|
| DEN HAAG | 13 NOVEMBER 1991 | NETTESHEIM J. |